# EUROPEAN PATENT SPECIFICATION

(11) **EP 2 103 235 B1**
(45) Date of publication and mention of the grant of the patent: **13.04.2016**
(21) Application number: 08164427.0
(22) Date of filing: 16.09.2008
(51) Int. Cl.: A47J 31/06

(54) **Improved espresso coffee machine with discharge path**
Verbesserte Espressokaffeemaschine mit Ablaufweg
Machine à café expresso améliorée avec une voie de décharge

(30) Priority: 17.09.2007 IT MI20071794
(43) Date of publication of application: 23.09.2009
(73) Proprietor: Tenacta Group S.p.A., 24052 Azzano S. Paolo (BG) (IT)
(72) Inventor: Morgandi, Arturo, 24129 Bergamo (IT)
(74) Representative: Locatelli, Massimo

(56) References cited:
- EP-A- 0 919 170
- WO-A-2005/053486
- DE-A1- 10 247 573

## Description

The present invention relates to an innovative machine for espresso coffee.

Machines are known for producing a coffee from coffee powder contained in a suitable wafer that is permeable to water. The structure of the dispensing head that receives the wafer is of fundamental importance for the quality of the beverage. Further, as this head is the part that comes into contact with both the beverage infusion and the coffee powder it is important that it is always appropriately clean and is as free as possible of deposits or stagnation.

WO-A-2005/053486 discloses a beverage making device wherein the bottom of the infusion chamber can be raised for cleaning purposes when the wafer is not present, thereby opening a passage leading downstream of the beverage dispensing mouth.

The general object of the present invention is to remedy the drawbacks of prior-art machines by providing a machine provided with a wafer-bearing head with improved features for both the cleaning and the quality of the beverage produced.

In view of this object it was decided to make, according to the invention, a machine for preparing espresso coffee as claimed in claim 1.

In order to make clearer the explanation of the innovative principles of the present invention and the advantages thereof over the prior art, with the help of the attached drawings a possible embodiment applying such principles will be disclosed below. In the drawings:
- figure 1 is a schematic section view of the infusion zone of a machine made according to the invention;
- figure 2 is a top, schematic and partial view of the support of wafer in the machine in figure 1;
- figure 3 is an enlarged view of a detail of figure 1 during dispensing of the beverage;
- figure 4 is a view like the one in figure 1, but in a different operating condition.

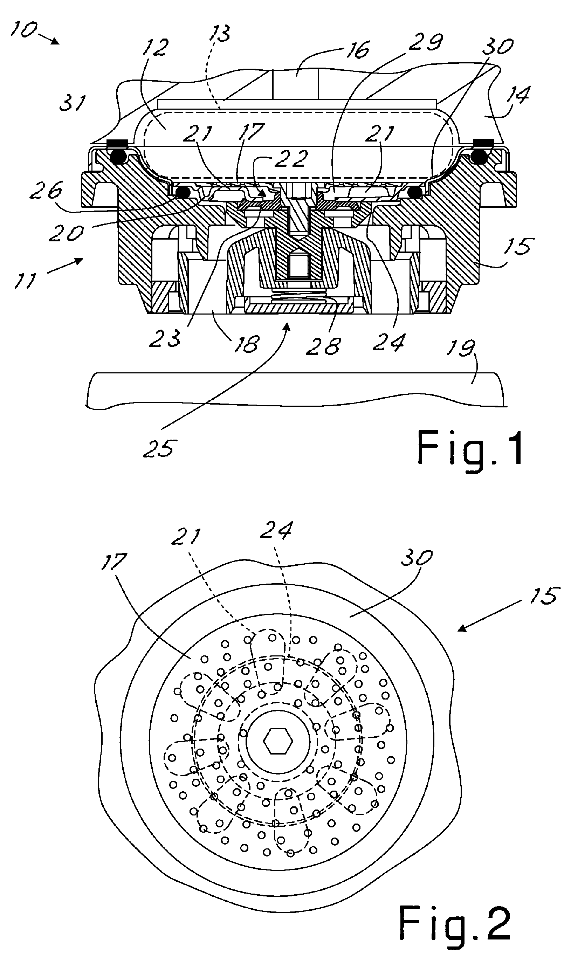

With reference to the figures, in figure 1 a machine is schematically shown that is indicated generally with 10, for the production of coffee beverage.

The machine 10 comprises a dispensing head 11 that defines in the interior thereof an infusion chamber 12 in which a known wafer 13 is positioned containing the coffee powder. The wafer generally consists of a porous enclosure for the passage of the infusion water.

The dispensing head comprises an upper half 14 and a lower half 15 that are movable towards and away from one another according to known means for opening and closing the chamber 12 and enabling the wafer to be introduced and removed.

The upper half is provided with a conduit 16 for carrying suitably heated water through a boiler of the machine that is not shown. The lower half 16 is for dispensing the beverage formed by the hot water that has traversed the wafer in the chamber. For this purpose, the lower half has the bottom of the seat 30 for the wafer that is covered by a perforated disc 17 through which the coffee infusion passes to a collecting chamber 29 underneath. The collecting chamber comprises an outlet 22 that communicates with a dispensing mouth 18 that dispenses the beverage to a collecting container 19 underneath (for example a coffee cup).

In order to permit infusion under appropriate pressure (which contributes to obtaining a creamy beverage of the finest quality), between the chamber 29 and the mouth 18 there is an overpressure valve that opens at a preset chamber pressure (for example, around 10 bar).

The collecting chamber 29 below the perforated disc 17 is formed by a collecting surface or conveying disc 20 surface provided with radial bumps 21 (as can be well seen by the dashed line in figure 2) protruding inside the collecting chamber and dividing the collecting chamber radially. Such bumps can be supports for the perforated disc 17. The bumps also act to convey the beverage to the outlet 22, made in the shape of a central annular passage. The passage 22 is closed by a deformable membrane 23 made of elastomeric material that makes said passage valve at preset pressure.

The deformable membrane 23 has the shape of a circular crown with a lesser and a greater diameter that rest stably. The upper face of the membrane is subjected to the pressure in the chamber 12 and (as can be seen in figure 1) in undeformed condition rests against the edge zone of the passage 22, so as to maintain the passage 22 closed.

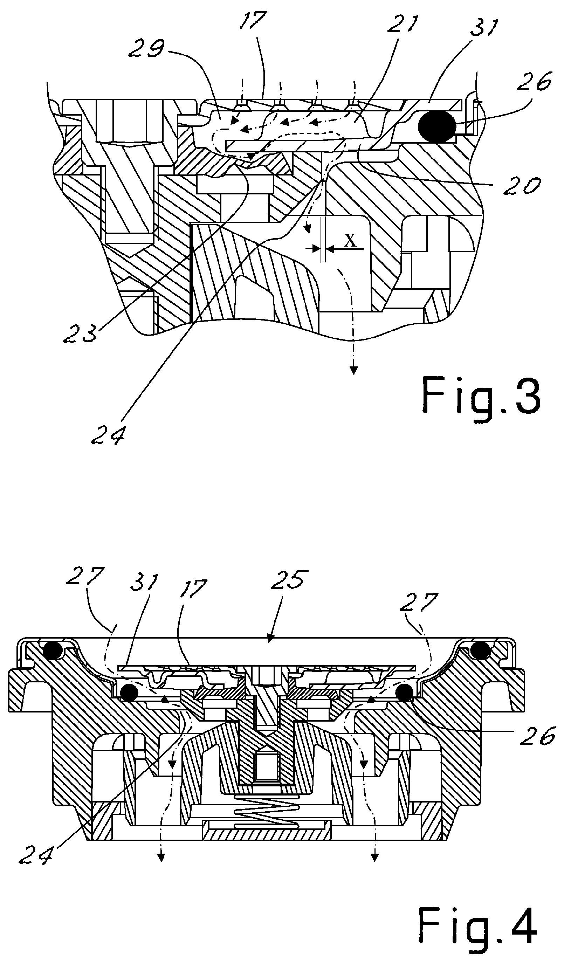

As can be seen well in figure 3, when the machine is operating the coffee beverage traverses the holes of the perforated plate 17 and pushes on the membrane until the pressure in the chamber reaches the preset value that causes the membrane to be deformed downwards. The beverage can thus go past the valve and is dispensed outside. Advantageously, as shown by the dot-and-dash line in figure 3, the outlet path is a labyrinth that passes inside the radial bumps 21 and then traverses a narrow annular passage or annular slit 24. For better results, a space X of the passage comprised between 0.2 and 1 mm and advantageously within 0.3 mm has found to be preferable. It has been seen surprisingly that passing the coffee beverage through a similar slit significantly improves the creaminess of the beverage.

The presence of the overpressure valve does not enable the liquid to be discharged that remains on the bottom of the chamber once pressurised dispensing has terminated. Further, the tortuous path and the valve prevent rapid draining of the coffee powders and of other solid or semisolid deposits during cleaning cycles without a wafer (i.e. cleaning cycles that are performable by running the machine without a wafer to circulate water, possibly with added detergents, through the chamber to the dispensing outlet).

In the machine according to the invention this is resolved as shown in figure 4, by making the bottom of the seat of the wafer liftable, so as to open between the seat of the wafer and the dispensing mouth 18 a second passage (shown by a dash-dot line) that is more direct and bypasses the overpressure valve 23.

According to the invention, the discharge passage 27 is formed peripherally on the bottom disc 20 that makes a movable unit 25 together with the perforated disc and the overpressure valve. The movable unit lifts up to move with a peripheral edge 31 from a sealing O-ring 26 and thus in turn makes a check valve that closes when the chamber is closed with a wafer inside. The unit or central part 25 is pushed to lift up (for example by approximately 1.5 mm) by a spring 28 that is compressed when the wafer pushes on the perforated disc 17.

In this manner the discharge passage opens whenever the infusion chamber is empty. Advantageously, the entire raisable central unit 25 generally has a mushroom shape with a spring 28 for pushing upwards that is arranged axially.

As can be seen in figure 4, when the unit 25 is lifted the annular passage 24 widens and is part of the discharge passage 27, so as to ensure good cleaning thereof.

At this point it is clear how the objects of the invention have been achieved.

## Claims

1. Machine for preparing espresso coffee, comprising an infusion chamber (12) with a seat (30) for a wafer (13) containing the coffee powder that is subjected to infusion, the bottom of the seat (30) comprising a perforated disc (17) for the passage of the coffee infusion to a collecting chamber (29) underneath, which comprises an infusion outlet (22) that communicates, through an infusion outlet path, with a dispensing mouth (18) for dispensing the beverage, the bottom of the seat (30) being pushed to rise by the action of a spring (28) , when the wafer seat is empty, to open a discharge passage (27) between the wafer seat (30) and the dispensing mouth (18), **characterised in that** between the infusion outlet (22) and the dispensing mouth (18) there is an overpressure valve (23) that opens when the pressure in the infusion chamber (12) exceeds a preset value and **in that** the collecting chamber (29) has a bottom formed by a conveying disc (20) on which the perforated disc (17) is placed, the conveying disc having a central passage, that forms said infusion outlet (22), on which a deformable elastomeric membrane forming said overpressure valve (23) is arranged, the bottom of the seat (30) that is lifted by a spring comprising a liftable central unit (25) consisting of the conveying disc (20) and of the perforated disc (17), this liftable central unit (25) having a peripheral edge (31) that in the lowered position, when a wafer (13) is inside the infusion chamber (12) and pushes on the perforated disc (17) so that the spring (28) is compressed, closes the bottom of the seat against a peripheral sealing o-ring (26), and in the raised position the peripheral edge (31) is moved from said sealing o-ring (26) to open, whenever the infusion chamber (12) is empty, said discharge passage (27) bypassing the overpressure valve (23) and being more direct than said infusion outlet path.

2. Machine according to claim 1, **characterised in that** the liftable central unit (25) generally has a mushroom shape with an axial spring (28) for pushing upwards.

3. Machine according to claim 1, **characterised in that** the conveying disc (20) comprises bumps (21) lifted inside the collecting chamber and which radially divide the chamber.

4. Machine according to claim 3, **characterised in that** downstream of the overpressure valve (23) the beverage directed to the dispensing mouth traverses the inside of the bumps (21).

5. Machine according to claim 1, **characterised in that** downstream of the overpressure valve (23) the beverage directed to the dispensing mouth traverses a narrow annular passage (24) with a passage space width comprised between 0.2 and 1 mm, preferably around 0.3 mm.

6. Machine according to claim 5, **characterised in that** when the discharge passage (27) opens the annular passage (24) widens and is part of the discharge passage (27).

## Patentansprüche

1. Espressokaffeemaschine, umfassend einen Brühraum (12) mit einem Sitz (30) für ein zu überbrühendes Pad (13) mit Kaffeemehl, wobei der Boden des Sitzes (30) eine Lochscheibe (17) für den Durchgang des gebrühten Kaffees in einen darunter liegenden Sammelraum (29) umfasst, der einen Brühauslass (22) umfasst, der durch einen Brühauslasskanal mit einer Ausgabemündung (18) in Verbindung steht, wobei der Boden des Sitzes (30) durch eine Feder (28) nach oben gedrückt wird, wenn der Padsitz leer ist, um einen Auslassdurchgang (27) zwischen dem Padsitz (30) und der Mündung (18) zu öffnen, **dadurch gekennzeichnet, dass** sich zwischen dem Brühauslass (22) und der Ausgabemündung (18) ein Überdruckventil (23) befindet, das sich öffnet, wenn ein voreingestellter Druckwert im Brühraum (12) überschritten wird, sowie dadurch, dass der Sammelraum (29) einen Boden aufweist, der aus einer Förderscheibe (20) besteht, auf die die Lochscheibe (17) gelegt wird, wobei die Förderscheibe einen mittigen Durchgang aufweist, der den Brühauslass (22) bildet, auf dem eine das Überdruckventil (23) bildende, verformbare Elastomermembran angeordnet ist, wobei der durch die Feder angehobene Boden des Sitzes (30) eine anhebbare Steuereinheit (25) umfasst, die aus der Förderscheibe (20) und der Lochscheibe (17) besteht, wobei die Steuereinheit (25) einen umlaufenden Rand (31) aufweist, der in abgesenkter Stellung, wenn ein Pad (13) sich im Brühraum (12) befindet und so gegen die Lochscheibe (17) drückt, sodass die Feder (28) komprimiert wird, den Boden des Sitzes gegen eine umlaufende O-Ring-Dichtung (26) schließt, während in angehobener Stellung der umlaufende Rand (31) von der O-Ring-Dichtung (26) wegbewegt wird, um sich zu öffnen, wenn der Brühraum (12) leer ist, wobei der Auslassdurchgang (27) das Überdruckventil (23) umgeht und direkter ist als der Brühauslasskanal.

2. Maschine nach Anspruch 1, **dadurch gekennzeichnet, dass** die anhebbare Steuereinheit (25) im Allgemeinen pilzförmig ist und eine axiale Feder (28) aufweist, um nach oben zu drücken.

3. Maschine nach Anspruch 1, **dadurch gekennzeichnet, dass** die Förderscheibe (20) Erhöhungen (21) innerhalb des Brühraums umfasst, die den Brühraum radial unterteilen.

4. Maschine nach Anspruch 3, **dadurch gekennzeichnet, dass** stromabwärts des Überdruckventils (23) das zur Ausgabemündung geleitete Getränk das Innere der Erhöhungen (21) durchströmt.

5. Maschine nach Anspruch 1, **dadurch gekennzeichnet, dass** stromabwärts des Überdruckventils (23) das zur Ausgabemündung geleitete Getränk einen engen ringförmigen Durchgang (24) mit einer Durchgangslückenweite von 0,2 bis 1 mm, bevorzugt von ca. 0,3 mm durchströmt.

6. Maschine nach Anspruch 5, **dadurch gekennzeichnet, dass** sich beim Öffnen des Auslassdurchgangs (27) der ringförmige Durchgang (24) erweitert und ein Teil des Auslassdurchgangs (27) wird.

## Revendications

1. Machine pour la préparation de café expresso, comprenant une chambre d'infusion (12) avec un siège (30) pour une capsule (13) contenant la poudre de café qui est soumise à une infusion, le fond du siège (30) comprenant un disque perforé (17) pour le passage de l'infusion de café vers une chambre collectrice (29) au-dessous, qui comprend une sortie d'infusion (22) qui communique, à travers une voie de sortie d'infusion, avec une embouchure de distribution (18) pour distribuer la boisson, le fond du siège (30) étant poussé pour se soulever sous l'action d'un ressort (28), quand le siège à capsule est vide, pour ouvrir un passage de décharge (27) entre le siège à capsule (30) et l'embouchure de distribution (18), **caractérisée en ce que**, entre la sortie d'infusion (22) et l'embouchure de distribution (18) se trouve une soupape de surpression (23) qui s'ouvre quand la pression dans la chambre d'infusion (12) dépasse une valeur prédéfinie et **en ce que** la chambre collectrice (29) a un fond formé par un disque transporteur (20) sur lequel est placé le disque perforé (17), le disque transporteur ayant un passage central, qui forme ladite sortie d'infusion (22), sur lequel est agencée une membrane élastomère déformable formant ladite soupape de surpression (23), le fond du siège (30) qui est soulevé par un ressort comprenant une unité centrale pouvant être soulevée (25) composée du disque transporteur (20) et du disque perforé (17), cette unité centrale pouvant être soulevée (25) ayant un bord périphérique (31) qui dans la position abaissée, quand une capsule (13) est à l'intérieur de la chambre d'infusion (12) et pousse sur le disque perforé (17) de manière que le ressort (28) soit comprimé, ferme le fond du siège contre un joint torique d'étanchéité périphérique (26), et dans la position soulevée, le bord périphérique (31) est déplacé dudit joint torique d'étanchéité (26) pour ouvrir, chaque fois que la chambre d'infusion (12) est vide, ledit passage de décharge (27) contournant la soupape de surpression (23) et étant plus direct que ladite voie de sortie d'infusion.

2. Machine selon la revendication 1, **caractérisée en ce que** l'unité centrale pouvant être soulevée (25) a généralement une forme de champignon avec un ressort axial (28) pour pousser vers le haut.

3. Machine selon la revendication 1, **caractérisée en ce que** le disque transporteur (20) comprend des bosses (21) dressées à l'intérieur de la chambre collectrice et qui divisent radialement la chambre.

4. Machine selon la revendication 3, **caractérisée en ce que**, en aval de la soupape de surpression (23), la boisson dirigée vers l'embouchure de distribution traverse l'intérieur des bosses (21).

5. Machine selon la revendication 1, **caractérisée en ce que**, en aval de la soupape de surpression (23), la boisson dirigée vers l'embouchure de distribution traverse un passage annulaire étroit (24) avec une largeur d'espace de passage comprise entre 0,2 et 1 mm, de préférence environ 0,3 mm.

6. Machine selon la revendication 5, **caractérisée en ce que**, quand le passage de décharge (27) s'ouvre, le passage annulaire (24) s'élargit et fait partie du passage de décharge (27).
